Europäisches Patentamt

European Patent Office

Office européen des brevets

(19)

(11) Numéro de publication : **0 138 668**
**B1**

(12) **FASCICULE DE BREVET EUROPÉEN**

(45) Date de publication du fascicule du brevet :
**15.03.89**

(51) Int. Cl.⁴ : **G 03 H   1/00**

(21) Numéro de dépôt : **84401840.8**

(22) Date de dépôt : **18.09.84**

(54) Dispositif d'enregistrement d'une image cohérente dans une cavité optique multimode.

(30) Priorité : **23.09.83 FR 8315156**

(43) Date de publication de la demande :
**24.04.85 Bulletin 85/17**

(45) Mention de la délivrance du brevet :
**15.03.89 Bulletin 89/11**

(84) Etats contractants désignés :
**DE GB NL SE**

(56) Documents cités :
**EP--A-- 0 095 960**
**FR--A-- 2 500 937**
**US--A-- 3 632 182**
**OPTICS COMMUNICATIONS, vol. 38, no. 4, 15 août 1981, pages 249-254, North-Holland Publishing Co., Amsterdam, NL; J.P. HUIGNARD et al.: "Coherent signal beam amplification in tow-wave mixing experiments with photorefractive Bi12SiO20 crystal"**
**APPLIED OPTICS, vol. 22, no. 6, 15 mars 1983, pages 815-818, Optical Society of America, New York, US; T. SATO et al.: "Coherent optical image delay device using a BSO phase-conjugate mirror and its applications"**
**IBM TECHNICAL DISCLOSURE BULLETIN, vol. 23, no. 2, juillet 1980, pages 831-832, New York, US; G.T. SINCERBOX et al.: "System to increase the efficiency of the holographic energy distribution for individual chip replacement"**

(73) Titulaire : **THOMSON-CSF**
**173, Boulevard Haussmann**
**F-75379 Paris Cédex 08 (FR)**

(72) Inventeur : **Huignard, Jean-Pierre**
**THOMSON-CSF SCPI 173, bld Haussmann**
**F-75379 Paris Cedex 08 (FR)**
Inventeur : **Rajbenbach, Henri**
**THOMSON-CSF SCPI 173, bld Haussmann**
**F-75379 Paris Cedex 08 (FR)**
Inventeur : **Loiseaux, Brigitte**
**THOMSON-CSF SCPI 173, bld Haussmann**
**F-75379 Paris Cedex 08 (FR)**
Inventeur : **Herriau, Jean-Pierre**
**THOMSON-CSF SCPI 173, bld Haussmann**
**F-75379 Paris Cedex 08 (FR)**

**EP 0 138 668 B1**

**Description**

L'invention se rapporte à un dispositif d'enregistrement d'une image cohérente dans une cavité optique multimode.

La mise en mémoire d'une information optique prend des formes variées et touche de nombreux domaines d'application : ce peut être l'enregistrement d'objets bidimensionnels ou tridimensionnels à des fins de sauvegarde. La photographie est la forme première du stockage optique, mais les lasers ont suscité le développement de nouveaux procédés applicables notamment aux domaines de l'audiovisuel et de l'informatique. Cependant, si les recherches sont nombreuses, les débouchés actuels limités : deux applications paraissent bien représenter les possibilités offertes par le stockage optique : le stockage holographique et le stockage d'images de télévision sur « vidéodisque ».

Le domaine de l'invention est celui du stockage et du traitement ultérieur d'images cohérentes. Mais contrairement aux deux applications précédemment nommées, ce domaine est celui de l'enregistrement dynamique d'images cohérentes.

Le dispositif de l'invention est un dispositif de stockage et de traitement d'une image optique basé sur l'utilisation de cristaux électro-optiques photosensibles. Il repose sur les propriétés de transfert d'énergie dans les expériences d'holographie dynamique avec les cristaux photo-réfractifs.

Un dispositif de l'art antérieur (selon l'article 54 (3) de la C.B.E.) décrit dans EP-A-95 960, permet la mise en mémoire d'une image cohérente dans une cavité optique multimode, il comprend une source cohérente qui génère une onde signal et une onde référence, des moyens de guidage optique permettant de former une boucle fermée dans laquelle circule chaque onde signal, un milieu interactif amplificateur qui est disposé sur le parcours de l'onde signal et sur celui de l'onde référence. L'onde signal interfère avec l'onde référence de ce milieu pour créer un réseau de diffraction et pour recevoir ainsi de l'énergie de cette onde de référence. Les moyens de guidage forment une cavité optique multimode : le milieu interactif amplificateur étant disposé dans le plan Fourier et de cette cavité. Une lame semitransparente est disposée sur le parcours de l'onde signal pour extraire une partie de l'énergie de la cavité optique multimode.

Mais ce dispositif de stockage d'image dans une cavité présente l'inconvénient suivant : pour cette configuration utilisant un cristal, le chemin optique relatif à chaque mode de la cavité doit rester égal à un multiple de cette longueur d'onde. Cette condition de phase qui correspond à l'oscillation impose un stigmatisme quasi parfait pour la formation de l'image dans la cavité.

Le dispositif de l'invention permet de pallier cet inconvénient. En effet, il permet de faire circuler une image optique dans une cavité en faisant un transfert de l'information alternativement d'un premier cristal à un second cristal. Ce transfert s'obtient par simple synchronisation de deux obturateurs.

Ainsi dans le dispositif de l'invention, il n'existe plus aucune condition sur la phase puisque l'information est alternativement stockée du premier cristal au second cristal. Les conséquences sur la réalisation du dispositif sont très importantes : en effet il n'y a plus de tolérances précises à respecter sur la position et la qualité des composants optiques et des lentilles constituant la cavité.

L'invention a pour objet un dispositif d'enregistrement d'une image cohérente dans une cavité optique multimode, comprenant une source cohérente de longueur d'onde $\lambda$ qui génère une onde signal, des moyens de guidage optique permettant de former une boucle fermée dans laquelle circule l'onde signal, ces moyens de guidage comportant des moyens de focalisation, caractérisé en ce qu'il comprend en outre :

— un premier et un deuxième milieux interactifs amplificateurs, disposés sur le parcours de l'onde signal dans la cavité, aux bornes desquels sont appliquées respectivement deux tensions telles que les champs électriques soient appliquées dans la direction 001 de chaque milieu interactif, la source cohérente délivrant en outre deux faisceaux références $P_1$ et $P_2$ qui interfèrent avec l'onde signal dans chacun des deux milieux interactifs pour créer deux réseaux de diffraction, les angles $\theta_i(\theta_i, \theta_2)$ formés entre l'onde signal et chacun des faisceaux références étant déterminés par la formule

$$\Lambda_i = \frac{\lambda}{2 \sin \theta_i}$$

$\Lambda_i$ étant le pas des strates dans le milieu considéré, au moins un modulateur de phase étant disposé sur le trajet de l'un des faisceaux références, ces milieux interactifs étant disposés au voisinage du plan de Fourier de cette cavité :

— un premier obturateur disposé sur le trajet de l'onde signal dans la cavité, du côté opposé à l'arrivée de l'onde signal par rapport au premier milieu interactif, ce premier obturateur étant fermé durant le temps d'enregistrement d'une image dans le premier milieu interactif et étant ouvert durant le temps de transmission d'une image du premier vers le deuxième milieu interactif ;

— un deuxième obturateur disposé sur le trajet de l'onde signal dans la cavité, du côté opposé à l'arrivée de l'onde signal par rapport au deuxième milieu interactif ; ce deuxième obturateur étant fermé durant le temps d'enregistrement d'une image dans le deuxième milieu interactif et étant ouvert durant la transmission d'une image du deuxième vers le premier milieu interactif ;

2

— une lame semi-transparente disposée sur le parcours de l'onde signal pour extraire une partie de l'énergie de la cavité optique multimode.

Les caractéristiques et avantages de l'invention apparaîtront mieux dans la description ci-après, en référence aux figures annexées où :

les figures 1 à 3 illustrent le fonctionnement d'un milieu amplificateur de l'art connu ;

la figure 4 représente un dispositif de l'art connu ;

les figures 5 à 7 représentent différentes caractéristiques de l'invention ;

la figure 8 représente le dispositif de l'invention ;

la figure 9 représente une variante du dispositif de l'invention.

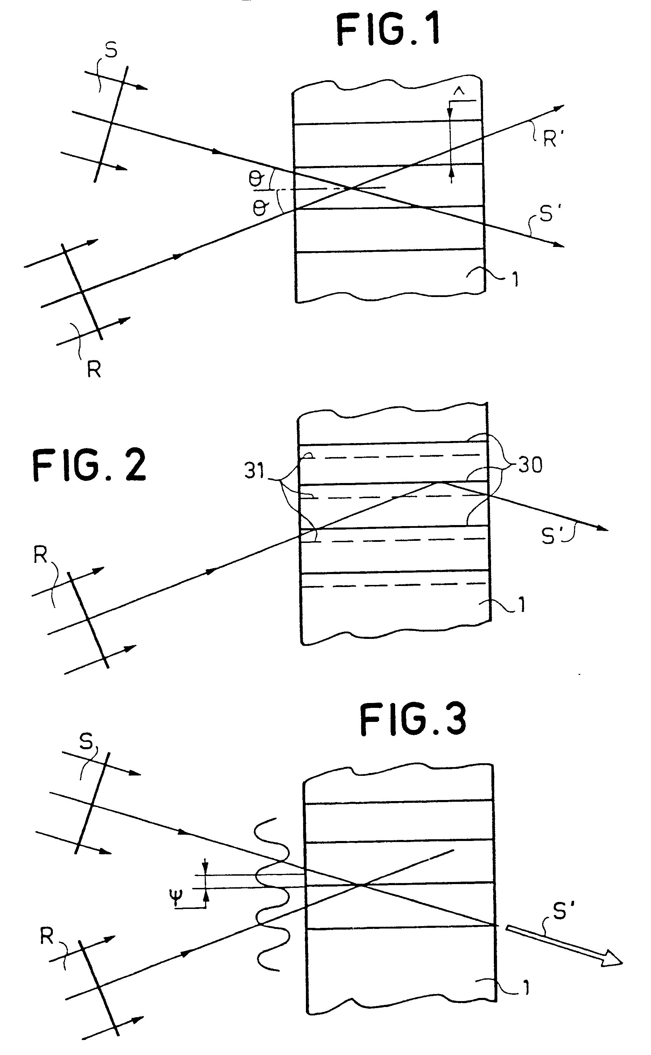

Avant de décrire le dispositif de l'invention qui permet la mise en mémoire d'une image cohérente à l'intérieur d'une cavité multimode en utilisant deux milieux amplificateurs dans lesquels interagissent deux ondes : l'onde objet et une onde de pompe, le phénomène d'interaction du type « deux ondes » va être décrit en illustration des figures 1 à 3.

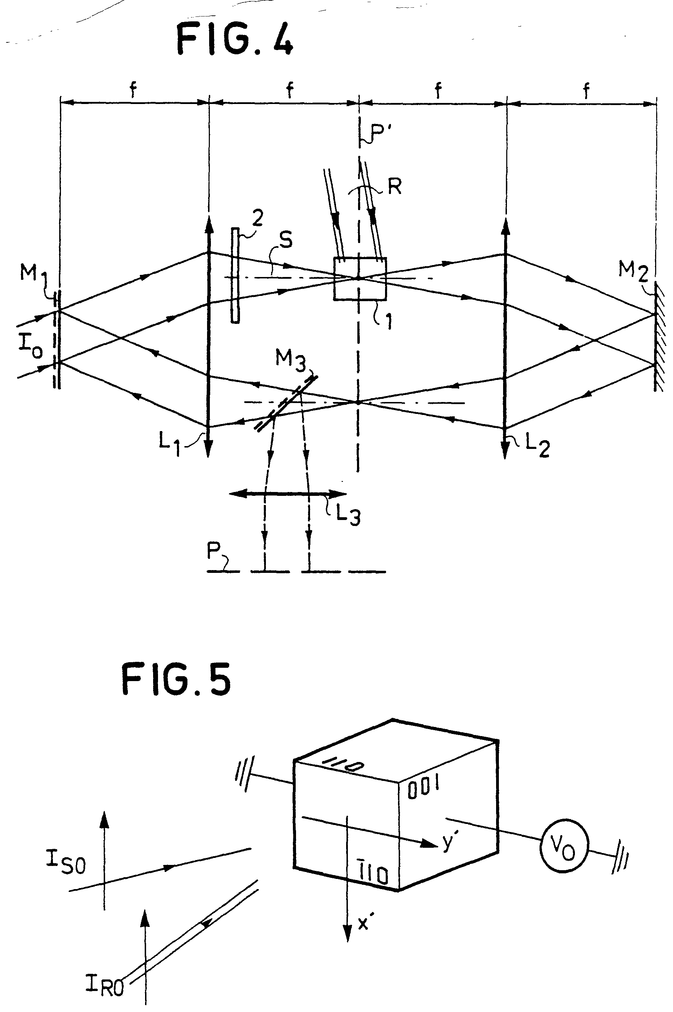

La figure 4, quant à elle, illustre un dispositif de l'art antérieur qui utilise une amplification de ce type : ce dispositif permettant l'amplification d'une onde d'énergie radiante incidente en transférant l'énergie d'un faisceau de pompage vers le signal.

Le dispositif de l'invention utilise les phénomènes de couplage d'onde à la lecture de réseaux de phase. On considère donc un réseau de phase à efficacité de diffraction élevée enregistré de façon permanente sur un support photosensible constitué de structures de phases diffractantes épaisses, photoinduites par variation d'indice dans les cristaux électrooptiques, photo-polymères ou matériaux argentiques blanchis.

En effet, on dispose actuellement de matériaux permettant l'inscription des réseaux ou hologrammes de phase à efficacité de diffraction élevée qui permettent une mémorisation de l'information de façon permanente. Ces matériaux sont « épais » par rapport au pas moyen des strates photoinduites, et leur comportement à l'inscription et à la lecture est décrit par le formalisme des ondes couplées, régi par la relation de Bragg.

Dans le cas simple de l'interférence de deux ondes planes, arrivant sur le support photosensible avec les incidences $+ \theta$ et $- \theta$, l'espacement des plans de diffraction dans le support est lié à l'angle $\theta$ et à la longueur d'onde $\lambda$ par la relation de Bragg $2 \Lambda \sin \theta = \lambda$. Inversement, un réseau donné de pas $\Lambda$ diffractera de façon significative un faisceau de lecture de longueur d'onde, s'il arrive sur le milieu avec l'angle $\theta$, lié à $\lambda$ et $\Lambda$ par cette relation de Bragg. Un réseau donné, constitué de plans de diffraction parallèles d'espacement $\Lambda$ peut être relu par un faisceau de longueur d'onde $\lambda'$, il suffit que son angle d'incidence $\theta'$ soit ajusté de façon que la loi de Bragg $2 \Lambda \sin \theta' = \lambda'$, soit vérifiée.

Si comme sur la figure 1, ce réseau est éclairé par deux ondes planes cohérentes R et S issues du même laser et de même intensité on a la relation

$$\Lambda = \frac{\lambda}{2 \sin \theta}.$$

Le pas $\Lambda$ résultant de l'interférence de R et S est rigoureusement identique à celui du réseau de phase, et ce sont, par exemple, ces mêmes faisceaux R et S qui ont servi à la fabrication du réseau des strates qui a été inscrit préalablement.

Ainsi dans l'épaisseur du milieu considéré, l'onde objet S a interféré avec une onde de référence R de front d'onde plan. Un réseau de franges d'interférence, ainsi créé, a généré dans le cristal, un réseau de strates d'indice. Ce réseau de strates diffracte une partie de l'énergie de l'onde de référence R en une onde diffractée S' dont le front d'onde est isomorphe du front d'onde objet.

Ainsi selon le formalisme des ondes couplées, il y a, après traversée du cristal, une redistribution de l'énergie entre les deux faisceaux. Cette nouvelle répartition d'énergie est fonction du déphasage relatif $\psi$ entre les deux ondes. Soient :

$I_R$, $I_S$ : L'intensité des deux ondes qui interfèrent ;

$I_{R'}$, $I_{S'}$ : L'intensité des deux ondes à la sortie du cristal ;

$\psi$ : Le déphasage de l'intensité lumineuse par rapport au réseau de phase photoinduit ;

$\eta$ : L'efficacité de diffraction de la structure.

Les intensités $I_S$ et $I_R$ s'obtiennent respectivement par les relations suivantes :

$$I'_R = I_R(1 - \eta) + I_S - 2 \sqrt{I_R(1 - \eta) I_S \eta} \sin \Psi$$

$$I'_S = I_R(1 - \eta) + \eta I_S + 2 \sqrt{I_R(1 - \eta) I_S \eta} \sin \Psi$$

Dans le cas particulier de la figure $I_R = I_0$, soit :

$$I'_R : I_0[1 - 2 \times \sqrt{\eta(1 - \eta)} \sin \Psi]$$

$$I'_S = I_0[1 + 2 \times \sqrt{\eta(1 - \eta)} \sin \Psi]$$

Le transfert d'énergie est donc optimum lorsqu'on satisfait simultanément aux conditions suivantes :
$\eta = 50\%$ $\psi = \pi/2$

Dans ce cas, on obtient après traversée du réseau de phase :
$I_{R'} = O$ ; $I_{S'} = 2I_O$

L'interprétation physique des phénomènes est la suivante : l'onde R incidente est diffractée par le réseau de phase tri-dimensionnel. L'onde S' ainsi générée est, par exemple, en retard de phase de $\pi/2$ par rapport à l'onde de lecture R. Dans un milieu 1 dans lequel interfèrent deux ondes il y a, en effet, déphasage de $\pi/2$ entre le réseau d'interférence 31 des deux faisceaux et le réseau de phase 30, comme cela est représenté à la figure 2.

Par contre l'onde R', qui est générée par diffraction de l'onde S, serait en avance de phase de $\pi/2$ par rapport à cette même onde S.

Du fait de l'introduction d'un déphasage $\psi = \pi/2$ entre les deux ondes R et S qui arrivent sur le milieu 1, il y a donc mise en phase cohérente de l'onde S' générée et de l'onde incidente S. En effet pour l'onde S', comme représenté à la figure 3, le déphasage est nul. Par contre pour l'onde R' le déphasage résultant par rapport à l'onde R est $\pi/2 + \pi/2 = \pi$. Par conséquent il y a interférence destructive dans la direction du faisceau R et donc diminution de l'énergie directement transmise selon R'.

Les conditions optimales pour le transfert d'énergies sont satisfaites avec les conditions expérimentales suivantes :

$$\eta = 50\% ; I_R = I_S = I_O ; \psi = \pi/2$$

et donc le gain de $I_{S'}/I_S$ vaut 3 dB.

Ces conditions sont remplies avec un milieu 1 réalisé par exemple en gélatine.

Un dispositif de l'art antérieur, basé sur les phénomènes de couplage d'ondes précédemment décrit, est représenté à la figure 4. Il concerne un dispositif d'amplification et d'oscillation d'une image optique cohérente. Le milieu amplificateur 1 est constitué d'un matériau photoréfractif fonctionnant par variation d'indice photoinduite. L'adjonction d'une boucle de contre-réaction constituée de miroirs $M_1$, $M_2$ et lentilles $L_1$, $L_2$ permet de réaliser une cavité optique multimode et d'entretenir une oscillation stable de l'image dans la cavité.

On réalise, dans le milieu amplificateur 1, l'interférence cohérente d'une onde signal S incidente avec une onde de référence R placée hors d'axe et beaucoup plus intense. Dans ces conditions on inscrit dans tout le volume de ce milieu 1, une structure de phase diffractante dont la constante de temps d'établissement dépend à la fois de la puissance disponible sur l'onde de référence et des mécanismes physiques mis en jeu dans ce milieu 1. Par un mécanisme d'auto-diffraction de l'onde de référence R dans le réseau de phase qu'elle vient d'inscrire on peut obtenir un renforcement de l'amplitude de l'onde signal S incidente donc une amplification après traversée du milieu 1. Ce phénomène de couplage d'ondes a pour origine la réponse non locale du milieu sous l'action de l'illumination des franges d'interférences. Ce décalage spatial entre la variation d'indice photoinduite et l'illumination peut être induit :

soit par déplacement des strates à vitesse constante ;

soit par changement d'indice sous l'action du gradient de l'illumination (mécanisme de diffusion des photoporteurs).

Le premier type de fonctionnement peut être envisagé avec des matériaux de type oxyde de bismuth silicium, oxyde de bismuth germanium, et le second type de fonctionnement avec des matériaux de type niobate de potassium, ou titanate de baryum.

L'intensité transmise se met alors sous la forme :
$I_T = I_S \exp \Gamma - \alpha \times \ell$
$\Gamma$ = coefficient exponentiel de gain
$\alpha$ = coefficient d'absorption
$\ell$ = longueur d'interaction.

Ce dispositif de l'art antérieur permet d'utiliser cet amplificateur paramétrique optique où tous les faisceaux sont à la même fréquence pour réaliser un oscillateur multimode compatible avec un signal image.

Dans ce dispositif de l'art antérieur représenté à la figure 4, il y a une cavité laser se composant des éléments suivants : deux miroirs $M_1$ et $M_2$ entre lesquels circule l'onde objet, et un milieu amplificateur 1 situé sur le trajet de cette onde objet. Deux lentilles $L_1$ et $L_2$ permettent de définir le trajet de cette onde objet dans la cavité. Le miroir $M_1$ est partiellement réfléchissant, par exemple semi-transparent, et permet l'introduction de l'onde objet dans la cavité ; le signal d'entrée pouvant alors être supprimé.

Le schéma de la cavité optique, utilisée et basée sur les propriétés de transformée de Fourier des lentilles, est indiqué sur la figure 4. En effet le plan P' est le plan focal commun aux deux lentilles $L_1$ et $L_2$, c'est le plan de Fourier de la cavité. Le signal d'entrée est constitué par une diapositive ou tout autre transducteur électro-optique servant à la composition de l'image en temps réel. Ce peut être, aussi, tout objet tridimensionnel éclairé par un faisceau de lumière cohérente dont l'image est ramenée dans un plan.

Le milieu amplificateur 1 est placé au voisinage du plan Fourier de la lentille $L_1$, ce qui permet un traitement du spectre de l'image. La lentille $L_2$ et le miroir $M_2$ permettent à l'onde issue du milieu amplificateur 1 de retourner vers le milieu photoréfractif après réflexion sur le miroir $M_1$, semi-transparent.

Le miroir $M_1$ assure à la fois l'introduction du signal de l'image incidente et la réflexion de l'onde amplifiée tournant dans la cavité. Une autre lame semi-transparente $M_3$ permet d'extraire une fraction de l'énergie contenue dans la cavité, la lentille $L_3$ permet la projection de l'image dans un plan P.

La condition d'oscillateur de cette cavité est assurée si le gain du milieu amplificateur 1 est supérieur aux pertes de la cavité dues notamment aux miroirs $M_1$, $M_2$ et aux réflexions sur les composants optiques.

Dans ce dispositif l'onde, qui se propage dans la cavité, doit répondre à des conditions de phase bien déterminées en entrée de cavité. En effet pour que le réseau inscrit dans le milieu amplificateur 1 se stabilise à chaque passage le réseau inscrit doit se superposer donc au réseau inscrit précédemment.

Aussi comme représenté à la figure 4, la distance séparant les miroirs $M_1$ et $M_2$ est de quatre fois la distance focale f des lentilles $L_1$ et $L_2$ qui doivent être identiques. On peut alors considérer différentes caractéristiques du dispositif de l'invention.

Si on inscrit dans un milieu photoréfractif à variation d'indice photoinduite, la figure d'interférence générée par une onde référence $I_{ro}$ (ou onde de pompe) et une onde signal $I_{so}$ de faible intensité ($I_{ro} \gg I_{so}$). Si la variation d'indice est décalée spatialement de $\Lambda/4$ ($\Lambda$ pas de franges) par rapport à la figure d'interférence, les effets d'autodiffraction assurent une redistribution de l'intensité lumineuse après traversée du cristal. L'intensité de l'onde signal s'écrit dans ces conditions :

$I_s = I_{so} \exp (\Gamma - \alpha) \ell$

$\Gamma$ = coefficient exponentiel de gain

$\alpha$ : coefficient d'absorption

$\ell$ : longueur d'interaction

Et $\Gamma$ est lié à la variation d'indice photoinduite maximum $\Delta n_s$ par la relation :

$$\Gamma = \frac{4 \pi \Delta n_s}{\lambda}$$

Suivant les matériaux utilisés un coefficient $\Gamma$ compris entre 1 et 10 $cm^{-1}$ a été mesuré expérimentalement.

Le décalage spatial entre la figure d'interférence et le changement d'indice s'obtient :

— soit par enregistrement à champ nul (diffusion des porteurs) dans du titane de baryum ($BaTiO_3$) par exemple

— soit par déplacement des franges d'interférences à vitesse $V_o$ telle que $2 \pi/\Lambda \times V_o \times \tau = 1$ : Enregistrement sous champ appliqué $E_o$ dans les cristaux d'oxyde de bismuth silicium (B.S.O.) par exemple.

Avec les cristaux d'oxyde de bismuth silicium (B.S.O.) et de titanate de baryum ($BaTiO_3$) des amplifications images de l'ordre de 10 ont été démontrées au laboratoire ($I_s/I_{so} > 10$).

L'étude des effets de couplage d'ondes dans les cristaux d'oxyde de bismuth-silicium (B.S.O.) a mis en évidence différents paramètres conduisant à une valeur intéressante du coefficient de gain exponentiel. Il est important pour ce cristal de respecter ces conditions optimales puisque la valeur du coefficient électro-optique est relativement faible comparée à celle du titanate de baryum (Ba Ti $O_3$). Comme représenté à la figure 5 le champ électrique est appliqué dans la direction 001 du cristal. L'axe électrooptique est dans la direction verticale X'.

La polarisation des ondes incidentes est alors verticale (parallèle à la direction X').

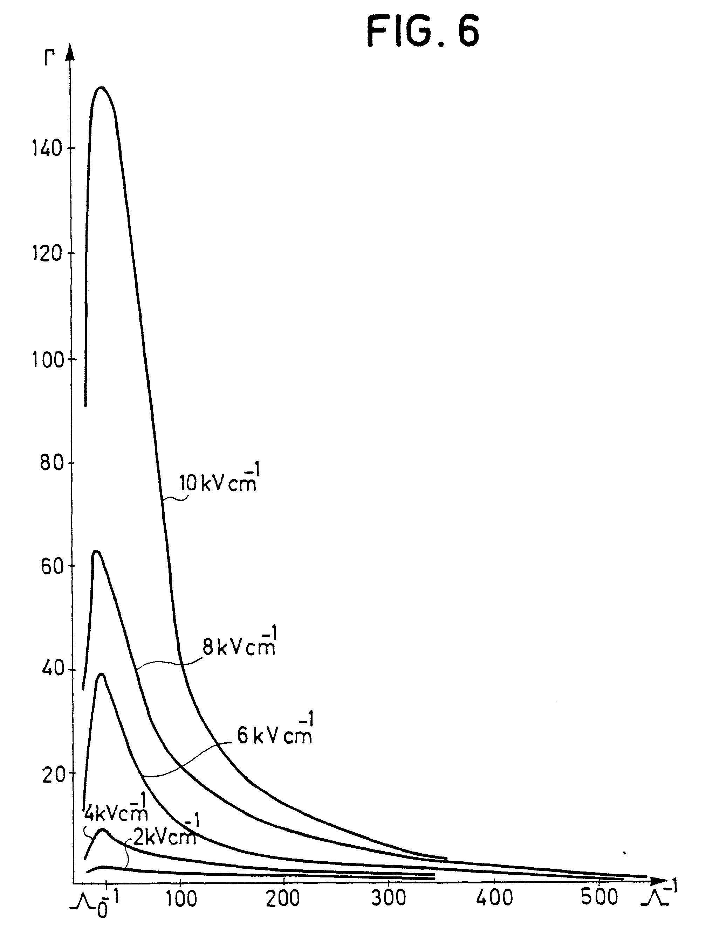

L'angle entre les deux faisceaux qui interagissent est faible, on peut le régler en se référant à la courbe de la figure 6 en sachant que :

$$\Lambda = \frac{\alpha}{2 \sin \theta} ;$$

$\Lambda$ étant le pas des strates dans le milieu.

Le dispositif de l'invention fonctionne pour de basses fréquences spatiales c'est-à-dire pour un pas de strate d'environ 20 $\mu$m.

Un modulateur de phase placé sur au moins l'un des faisceaux références $P_1$, $P_2$ assure une translation de fréquence de l'onde, donc un dépalcement de la figure d'interférences à vitesse $V_o$. La vitesse de déplacement est choisie de telle façon que

$$\frac{2 \pi}{\Lambda} \times V_0 \times \tau = 1$$

$\tau$ = temps d'inscription de la variation d'indice photoinduite.

La fréquence spatiale moyenne utilisée est ajustée au voisinage d'une valeur $\Lambda_o^{-1}$ optimale telle que le coefficient exponentiel de gain $\Gamma$ soit maximum. L'étude de la variation du coefficient $\Gamma$ en fonction de la fréquence spatiale $\Lambda^{-1}$ conduit à la courbe représentée à la figure 6.

Il existe une résonance de la valeur $\Gamma$ pour une valeur du pas des franges équivalente à la longueur de migration L des photoporteurs :

$$\frac{2\pi}{\Lambda} \times L \simeq 1$$

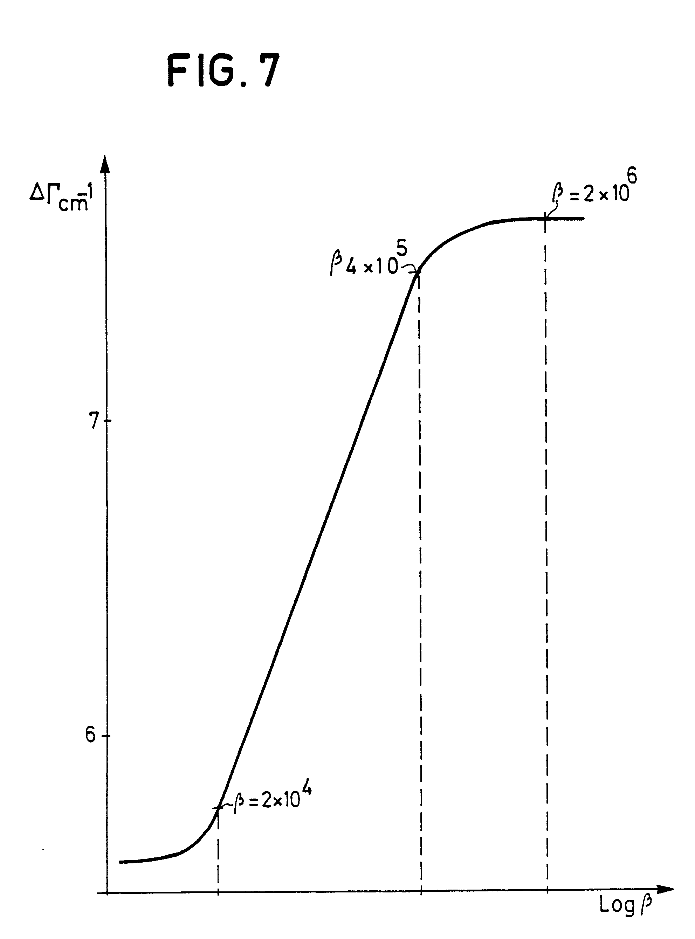

Le rapport des faisceaux interférant sur le cristal $\beta = I_{r_0}/I_{s_0}$ n'est pas quelconque : la courbe représentée à la figure 7 met en évidence des valeurs plus élevées de $\Gamma$ pour des rapports $\beta > 10^3$. La saturation s'obtient pour $\beta \simeq 10^5$.

La longueur d'onde incidente ne doit pas correspondre à une valeur trop élevée du coefficient d'absorption $\alpha$. la raie jaune du laser Krypton $\lambda = 568$ nm ($\alpha \simeq 0,2$ cm$^{-1}$) constitue un bon compromis pour ces expériences de couplages d'ondes dans un cristal d'oxyde de bismuth-silicium (B.S.O.). Cette longueur d'onde autorise des longueurs d'interaction $\ell$ de l'ordre de 1 cm sans pertes notables.

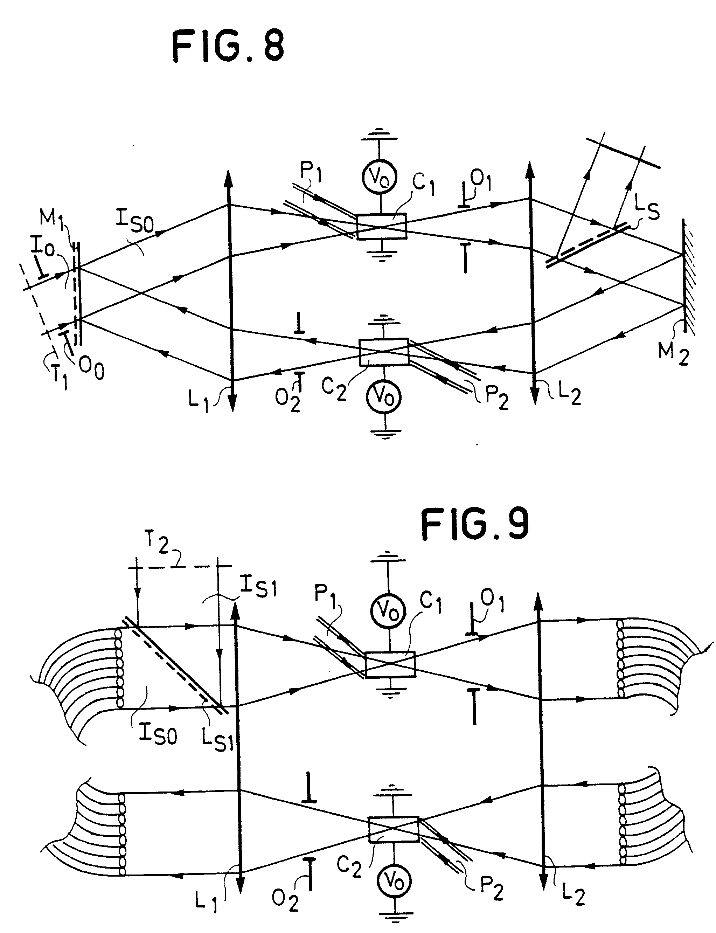

Le dispositif de l'invention est représenté sur la figure 8. Il utilise deux cristaux $C_1$ et $C_2$ photoréfractifs d'oxyde de bismuth-silicium (B.S.O.) situés dans le plan de Fourier de la cavité fonctionnant dans la configuration « deux ondes » avec transfert d'énergie de l'onde de pompe avec l'onde signal. Les conditions optimales de ce transfert ont été précisées précédemment (orientation cristallographique ; rapports des faisceaux ; fréquence spatiale).

Les angles $\theta_1$, $\theta_2$ entre l'onde signal et les faisceaux de références $P_1$ et $P_2$ sont choisis tels que les coefficients exponentiels de gain dans chaque cristal $C_1$ et $C_2$ soient maximum, en se référant à la courbe de la figure 6 avec

$$\Lambda_1 = \frac{\lambda}{2 \sin \theta_1} \quad \text{en} \quad C_1$$

$$\Lambda_2 = \frac{\lambda}{2 \sin \theta_2} \quad \text{en} \quad C_2$$

Le cycle permettant de faire circuler l'image dans la cavité peut être décrit comme suit :

— L'information à stocker est introduite par l'intermédiaire du transparent $T_1$. L'obturateur électro-optique $O_0$ est dans l'état ouvert. $O_1$ est fermé. On enregistre, dans le cristal $C_1$, la figure d'interférence correspondant au faisceau de pompe $P_1$ et au faisceau objet $I_{SO}$.

— L'obturateur $O_0$ est fermé. L'image est relue par l'onde de référence $P_1$. Le faisceau diffracté a pour intensité :

$$I_S = I_{SO} \exp(\Gamma - \alpha)\ell$$

Soit $I_S > I_{SO}$.

Une fraction de l'intensité du faisceau diffracté est extraite de la cavité par l'intermédiaire de la lame séparatrice $L_S$. L'onde est réenregistrée dans le cristal $C_2$. L'obturateur $O_2$ est fermé.

— L'image est relue par l'onde de référence $P_2$ et réenregistrée dans le cristal $C_1$, l'obturateur $O_\cdot$ étant fermé.

L'information passe donc alternativement du cristal $C_1$ au cristal $C_2$, le gain correspondant à chaque passage compensant les pertes introduites par la lame séparatrice $L_S$ ainsi que par les composants optiques. Dans le cas particulier de l'oxyde de bismuth-silicium (B.S.O.), le déplacement des franges d'interférences à l'enregistrement est assuré par un modulateur de phase placé sur l'onde $P_1$. Ce seul modulateur assure le déplacement des strates à la fois pour l'enregistrement dans le cristal $C_1$ et dans le cristal $C_2$.

L'amplification des signaux obtenus est très importante, ce qui permet de travailler avec de faibles signaux.

Le dispositif de l'invention permet donc de faire circuler une image optique dans une cavité en faisant un transfert de l'information alternativement du cristal $C_1$ au cristal $C_2$. Ce transfert s'obtient par simple synchronisation des obturateurs $O_1$ et $O_2$. ($O_1$ est dans l'état fermé si $O_2$ est ouvert et réciproquement).

Dans ce dispositif proposé, il n'y a pas de condition sur la phase puisque l'information est alternativement stockée du cristal $C_1$ au cristal $C_2$. Les conséquences sur réalisation du dispositif sont les suivantes :

— pas de tolérances précises sur la position et la qualité des composants optiques et des lentilles $L_1$, $L_2$ constituant la cavité,

— le transfert d'image $C_1$ à $C_2$ peut être également envisagé par l'intermédiaire d'un faisceau ordonné de fibres optiques,

— le temps nécessaire pour parcourir N tours de la cavité est égal à $T = 2 \times N \tau \cdot$ constante de temps d'inscription de l'hologramme dans le cristal $C_1$ ou $C_2$,

— une fonction de traitement de l'image peut être obtenue en plaçant un filtre d'amplitude ou de phase dans le plan du spectre du signal incident.

La figure 9 illustre une variante du dispositif de l'invention les miroirs $M_1$ et $M_2$ de la figure 8 étant supprimés et remplacés par des faisceaux de fibres optiques.

La lame semi-transparente $L_{S1}$ permet d'introduire dans la cavité le faisceau objet $I_{S1}$ qui a traversé, par exemple, un transparent $T_2$.

Dans cette variante est bien mise en évidence la différence essentielle avec le dispositif de l'art antérieur ; les trajets optiques dans différentes fibres optiques sont manifestement tous différents.

On peut considérer par exemple, des éléments de caractéristiques suivantes par

— les cristaux $C_1$ et $C_2$ sont en oxyde de bismuth-silicium de 5 à 10 mm d'épaisseur, de surface 5 × 5 mm$^2$ ; les tensions $U_1$ et $U_2$ étant d'environ 6 kv cm$^{-1}$ ;

— les obturateurs $O_0$, $O_1$, $O_2$ sont des obturateurs mécaniques ou électro-optiques du type à cristaux liquides par exemple.

Pour utiliser la cavité pour le traitement d'images, un filtre d'amplitude et de phase peut être placé dans le plan de Fourier commun des lentilles $L_1$-$L_2$, l'un des deux cristaux ($C_1$ ou $C_2$) se trouvant de ce fait même légèrement décalé, afin de modifier le contenu en fréquences spatiales de l'image. Le filtre peut aussi être disposé dans le plan image du transparent $T_1$.

L'introduction dans la cavité d'une fonction de phase $\theta(x, y)$ induit une modulation d'intensité de la forme :

$$I_T = I_0 \times T_1 \times R_3 \frac{\exp \Gamma_1}{1 - T_3 R_1 \exp \Gamma \frac{1}{2} \sin^2 \phi(x, y)}$$

Une telle fonction de transfert autorise des opérations non linéaires sur des images.

Pour effacer l'information stockée dans la cavité les cristaux photoréfractifs sont éclairés uniformément par les ondes de référence (ou onde de pompe) $P_1$ et $P_2$ ce qui relaxe la variation d'indice photoinduite, les deux obturateurs étant maintenus fermés.

Différents matériaux peuvent être utilisés comme milieux d'amplification dans la cavité. Les matériaux photoréfractifs constituent une solution intéressante pour l'amplification cohérente des images par transfert d'énergie à partir d'une onde de pompe. Les cristaux utilisés sont : le niobate de potassium ($KNbO_3$), le titane de baryum ($BaTiO_3$), l'oxyde de bismuth-silicium ($Bi_{12}SiO_{20}$), l'oxyde de bismuth-germanium ($Bi_{12}GeO_{20}$). Pour chacun de ces cristaux l'amplification cohérente d'une image a été obtenue avec des gains de l'ordre de 5 à 1 500. Les valeurs exceptionnellement élevées ($\simeq$ 1 500) du gain sont obtenues avec les cristaux de Titanate de Baryum (Ba Ti $O_3$) et l'oxyde de Bismuth-Silicium (B S O) pour une orientation électro-optique particulière de ces matériaux. Les énergies d'inscription requises dans le domaine visible sont typiquement de l'ordre de 100 μJ cm$^{-2}$ pour l'oxyde de Bismuth-Silicium à 100 m J cm$^2$ pour le Titane de Baryum, donc compatibles avec les niveaux de puissance disponibles à partir d'un laser Argon.

Le système d'interférence inscrit dans ce milieu peut en fonction de la dynamique du matériau considéré comporter n réseaux différents, mais alors la variation d'indice maximum est divisé par n, il y a moins de gain pour chaque réseau.

Ainsi par exemple on peut considérer l'éclairement instantané du cristal par tois ondes signal à trois longueurs d'onde différentes $\lambda_1$, $\lambda_2$, $\lambda_3$, ce qui entraîne donc, si l'on considère trois ondes référence de mêmes longueurs d'onde : $\lambda_1$, $\lambda_2$, $\lambda_3$, l'inscription de trois réseaux en même temps. Le dispositif de l'invention permet donc la mise en mémoire d'une image cohérente trichrome.

**Revendications**

1. Dispositif d'enregistrement d'une image cohérente dans une cavité optique multimode, comprenant une source cohérente de longueur d'onde $\lambda$ qui génère une onde signal ($I_0$), des moyens de guidage optique permettant de former une boucle fermée dans laquelle circule l'onde signal, ces moyens de guidage comportant des moyens de focalisation, caractérisé en ce qu'il comprend en outre :

un premier et un deuxième milieux interactifs ($C_1$, $C_2$) amplificateurs disposés sur le parcours de l'onde signal dans la cavité ($I_{SO}$) aux bornes desquels sont appliquées respectivement deux tensions ($V_1$, $V_2$) telles que des champs électriques soient appliquées dans la direction 001 de chaque milieu interactif, la source cohérente délivrant en ordre deux faisceaux références ($P_1$ et $P_2$) qui interfèrent avec l'onde signal dans chacun des deux milieux interactifs ($C_1$ et $C_2$) pour créer deux réseaux de diffraction, les angles $\theta$ ($\theta_1$, $\theta_2$) formés entre l'onde signal et chacun des faisceaux références ($P_1$ et $P_2$) étant déterminés par la formule

$$\Lambda_i = \frac{\lambda}{2 \sin \theta_i}$$

$\Lambda_i$ étant le pas des strates dans le milieu considéré, au moins un modulateur de phase étant disposé sur le trajet de l'un des faisceaux références ($P_1$, $P_2$), ces milieux interactifs ($C_1$, $C_2$) étant disposés au voisinage du plan de Fourier de cette cavité ;

**EP 0 138 668 B1**

un premier obturateur disposé sur le trajet de l'onde signal dans la cavité, du côté opposé à l'arrivée de l'onde signal par rapport au premier milieu interactif, ce premier obturateur étant fermé durant le temps d'enregistrement d'une image dans le premier milieu interactif et étant ouvert durant le temps de transmission d'une image du premier vers le deuxième milieu interactif ;

un deuxième obturateur disposé sur le trajet de l'onde signal dans la cavité, du côté opposé à l'arrivée de l'onde signal par rapport au deuxième milieu interactif ; ce deuxième obturateur étant fermé durant le temps d'enregistrement d'une image dans le deuxième milieu interactif et étant ouvert durant la transmission d'une image du deuxième vers le premier milieu interactif ;

une lame semi-transparente disposée sur le parcours de l'onde signal ($I_{SO}$) pour extraire une partie de l'énergie de la cavité optique multimode.

2. Dispositif selon la revendication 1, caractérisé en ce que le pas des strates dans le milieu constitué a une valeur voisine de 20 micromètres.

3. Dispositif selon la revendication 1, caractérisé en ce que les moyens de guidage comprennent deux miroirs plans ($M_1$, $M_2$) dont les surfaces réfléchissantes sont disposées face à face, l'un de ces miroirs ($M_1$) étant un miroir semi-transparent, chaque onde signal entrant dans la cavité via ce miroir semi-transparent ($M_1$), deux lentilles, une première ($L_1$) et une seconde ($L_2$), au moins, étant disposées entre ces deux miroirs de façon à avoir un plan focal commun qui est le plan de Fourier de la cavité, l'incidence de chaque onde signal en entrée étant telle qu'après passage à travers la première lentille ($L_1$) elle atteigne le premier milieu interactif amplificateur ($C_1$), le trajet optique de l'onde signal dans la cavité se refermant sur lui-même en traversant le deuxième milieu interactif amplificateur ($C_2$).

4. Dispositif selon la revendication 1, caractérisé en ce que plusieurs ondes signal à différentes longueurs d'onde sont introduites et circulent dans la cavité optique et interfèrent dans les deux milieux ($C_1$, $C_2$) avec des ondes référence de mêmes longueurs d'onde qui leur sont cohérentes.

5. Dispositif selon la revendication 4, caractérisé en ce que trois ondes signal à trois longueurs d'onde différentes ($\lambda_1$, $\lambda_2$, $\lambda_3$) sont introduites et circulent dans la cavité optique et interfèrent dans les deux milieux ($C_1$, $C_2$) avec des ondes référence de même longueur d'onde ($\lambda_1$, $\lambda_2$, $\lambda_3$) et qui leur sont cohérentes.

6. Dispositif selon la revendication 1, caractérisé en ce que les milieux interactifs amplificateurs ($C_1$ et $C_2$) sont réalisés en matériau photoréfractif.

7. Dispositif selon la revendication 6, caractérisé en ce que ce matériau photoréfractif est choisi parmi les matériaux suivants : Niobate de Potassium, Titanate de Baryum, Oxyde de Bismuth-Silicium, Oxyde de Bismuth-Germanium.

8. Dispositif selon la revendication 1, caractérisé en ce qu'un filtre d'amplitude et de phase est placé dans le plan focal (P') commun des deux premières lentilles ($L_1$, $L_2$) sur le trajet de l'onde signal.

**Claims**

1. A device for recording a coherent image in an optical multimode cavity, comprising a coherent source with a wavelength of $\lambda$ which generates a signal wave ($I_o$), optical guide means making it possible to form a closed loop in which the signal wave circulates, said guide means comprising focussing means, characterized in that it furthermore comprises :

— first and second interactive amplifying media ($C_1$ and $C_2$) placed on the path of the signal wave in the cavity ($I_{so}$), to the terminals of which there are respectively applied two voltages ($V_1$ and $V_2$) such that the electric fields are applied in the 001 direction of each interactive medium, the coherent source supplying two reference beams ($P_1$ and $P_2$) in order which interfere with the signal wave in each of the two interactive media ($C_1$ and $C_2$) to create two diffraction gratings, the angles $\theta_i$ ($\theta_1$ and $\theta_2$) formed between the signal wave and each of the reference beams ($P_1$ and $P_2$) being determined by the formula

$$\Lambda_i = \frac{\lambda}{2 \sin \theta_i}$$

$\Lambda_i$ being the stratum rate in the medium considered, and least one phase modulator being placed on the path of the reference beams ($P_1$ and $P_2$), the interactive media ($C_1$ and $C_2$) being placed adjacent to the Fourier plane of the said cavity ;

— a first seal placed on the path of the signal wave in the cavity, on the side opposite to the arrival of the signal wave in relation to the first interactive medium, this first seal being closed during the time of recording an image in the first interactive medium and being open during the time of transmission of an image from the first towards the second interactive medium ;

— a second seal placed on the path of the signal wave in the cavity, on the side opposite to the arrival of the signal wave in relation to the second interactive medium ; this second seal being closed during the time of recording of an image in the second interactive medium and being open during the transmission of an image from the second towards the first interactive medium ; and

— a semi-transparent sheet place on the path of the signal wave ($I_{so}$) in order to extract a part of the energy of the optical multimode cavity.

2. The device as claimed in claim 1, characterized in that the stratum rate in the medium constituted has a value in the vicinity of 20 microns.

3. The device as claimed in claim 1, characterized in that the guide means comprise two plane mirrors ($M_1$ and $M_2$) whose reflecting surfaces are placed face to face, one ($M_1$) of these mirrors being a semi-transparent mirror, each signal wave entering the cavity via this semi-transparent mirror ($M_1$), two lenses, first lens ($L_1$) and a second lens ($L_2$), at least, being placed between these two mirrors in such a manner to have a common focal plane which is the Fourier plane of the cavity, the incidence of each entering signal wave being such that after moving through the first lens ($L_1$) it reaches the first interactive amplifying medium ($C_1$), the optical path of the signal wave in the cavity doubling on itself when crossing the second amplifying interactive medium ($C_2$).

4. The device as claimed in claim 1, characterized in that several signals waves with different wavelengths are introduced and circulate in the optical cavity and interfere in the two media ($C_1$ and $C_2$) with reference waves with the same wavelengths which are coherent to them.

5. The device as claimed in claim 4, characterized in that three signals waves with three different wavelengths ($\lambda_1$, $\lambda_2$ and $\lambda_3$) are introduced and circulate in the optical cavity and interfere in the two media ($C_1$ and $C_2$) with reference waves of the same wavelength ($\lambda_1$, $\lambda_2$ and $\lambda_3$) and which are coherent with respect thereto.

6. The device as claimed in claim 1, characterized in that the amplifying interactive media ($C_1$ and $C_2$) are made of a photoreactive material.

7. The device as claimed in claim 6, characterized in that the photoreactive material is selected from the following : potassium niobate, barium titanate, bismuth silicon oxide, bismuth germanium oxide.

8. The device as claimed in claim 1, characterized in that a phase and amplitude filter is placed in the focal plane (P') of the two first lenses ($L_1$ and $L_2$) on the path of the signal wave.

## Patentansprüche

1. Vorrichtung zur Aufzeichnung eines kohärenten bildes in einem optischen Multimode-Hohlraum mit einer kohärenten Lichtquelle der Wellenlänge λ, welche eine Signalwelle ($I_o$) erzeugt, wobei Mittel zur optischen Führung die Bildung einer geschlossenen Schleife ermöglichen, in welcher die Signalwelle umläuft, und diese Führungsmittel Fokussierungsmittel umfassen, dadurch gekennzeichnet, daß sie ferner umfaßt :

— ein erstes verstärkendes interaktives Medium sowie ein zweites verstärkendes interaktives Medium ($C_1$, $C_2$), welche auf dem Weg der Signalwelle in dem Hohlraum ($I_{So}$) angeordnet sind und an deren Anschlüsse jeweils eine solche Spannung ($V_1$, $V_2$) angelegt ist, daß elektrische Felder in der Richtung 001 jedes interaktiven Mediums angelegt werden, wobei die kohärente Quelle der Ordnung nach zwei Referenzbündel ($P_1$ und $P_2$) abgibt, welche in jedem der beiden interaktiven Medien ($C_1$ und $C_2$) mit der Signalwelle interferieren, um zwei Beugungsmuster zu bilden, wobei die zwischen der Signalwelle und jedem der Referenzbündel ($P_1$ und $P_2$) gebildeten Winkel $\theta_i$ ($\theta_1$, $\theta_2$) durch die Formel

$$\Lambda_i = \frac{\lambda}{2 \sin \theta_i}$$

bestimmt sind,

worin $\Lambda_i$ der Teilungsschritt der Schichten in dem betrachteten Medium ist, wobei ferner wenigstens ein Phasenmodulator auf dem Weg eines der Referenzbündel ($P_1$, $P_2$) angeordnet ist und diese interaktiven Medien ($C_1$, $C_2$) in der Nähe der Fourier-Ebene dieses Hohlraums angeordnet sind ;

— einen ersten Verschluß, der auf dem Weg der Signalwelle in dem Hohlraum auf der bezüglich des zweiten interaktiven Mediums entgegengesetzten Seite des Eintritts der Signalwelle angeordnet ist, wobei dieser erste Verschluß während der Aufzeichnungszeit eines Bildes in dem ersten interaktiven Medium verschlossen ist und während der Übertragungszeit eines Bildes aus dem ersten interkativen Medium bis zum zweiten interaktiven Medium geöffnet ist ;

— einen zweiten Verschluß, der auf dem Weg der Signalwelle in dem Hohlraum auf der bezüglich des zweiten interaktiven Mediums entgegengesetzten Seite des Eintritts der Signalwelle angeordnet ist, wobei dieser zweite Verschluß während der Aufzeichnungszeit eines Bildes in dem zweiten interaktiven Medium geschlossen ist und während der Übertragung eines Bildes aus dem zweiten interaktiven Medium zum ersten interaktiven Medium geöffnet ist ;

— eine halbdurchlässige Platte, die auf dem Weg der Signalwelle ($I_{so}$) angeordnet ist, um einen Energieanteil des optischen Multimode-Hohlraumes zu entnehmen.

2. Vorrichtung nach Anspruch 1, dadurch gekennzeichnet, daß der Teilungsschritt der Schichten in dem bestehenden Medium einen Wert hat, der bei 20 Mikrometer liegt.

3. Vorrichtung nach Anspruch 1, dadurch gekennzeichnet, daß die Führungsmittel zwei Planspiegel ($M_1$, $M_2$) umfassen, deren reflektierende Flächen einander gegenüberliegen, wobei einer dieser Spiegel ($M_1$) ein halbdurchlässiger Spiegel ist und jede Signalwelle über diesen halbdurchlässigen Spiegel ($M_1$) in den Hohlraum eintritt, sowie wenigstens zwei Linsen, eine erste Linse ($L_1$) und eine zweite Linse ($L_2$),

zwischen diesen beiden Spiegeln so angeordnet sind, daß sie eine gemeinsame Brennebene haben, welche die Fourier-Ebene des Hohlraumes ist, wobei der Eintrittwinkel jeder Eingangssignalwelle derart ist, daß sie nach Durchquerung der ersten Linse ($L_1$) das erste verstärkende interaktive Medium ($C_1$) erreicht, wobei der optische Weg der Signalwelle in dem Hohlraum bei der Durchquerung des zweiten verstärkenden interaktiven Mediums ($C_2$) in sich geschlossen ist.

4. Vorrichtung nach Anspruch 1, dadurch gekennzeichnet, daß mehrere Signalwellen verschiedener Wellenlängen in den optischen Hohlraum eingeführt werden und darin umlaufen und in den beiden Medien ($C_1$, $C_2$) mit Referenzwellen gleicher Wellenlänge, welche mit ihnen kohärent sind, interferieren.

5. Vorrichtung nach Anspruch 4, dadurch gekennzeichnet, daß drei Signalwellen mit drei verschiedenen Wellenlängen ($\lambda_1$, $\lambda_2$, $\lambda_3$) in den optischen Hohlraum eingeführt werden und darin umlaufen und in den beiden Medien ($C_1$, $C_2$) mit Referenzwellen gleicher Wellenlänge ($\lambda_1$, $\lambda_2$, $\lambda_3$), welche mit ihnen kohärent ist, interferieren.

6. Vorrichtung nach Anspruch 1, dadurch gekennzeichnet, daß die verstärkenden interaktiven Medien ($C_1$ und $C_2$) aus einem lichtbrechendem Material bestehen.

7. Vorrichtung nach Anspruch 6, dadurch gekennzeichnet, daß das lichtbrechende Material unter den folgenden Stoffen gewählt ist : Kaliumniobat, Bariumtitanat, Wismut-Silizium-Oxid, Wismut-Germanium-Oxid.

8. Vorrichtung nach Anspruch 1, dadurch gekennzeichnet, daß ein Ampliduten- und Phasenfilter in der Brennebene (P') angeordnet ist, welche den beiden ersten Linsen ($L_1$, $L_2$) auf dem Weg der Signalwelle gemeinsam ist.

# FIG.1

# FIG. 2

# FIG.3

# FIG. 4

# FIG. 5

# FIG. 6

# FIG. 7

# FIG. 8

# FIG. 9